# EUROPEAN PATENT SPECIFICATION

(11) **EP 3 835 113 B1**
(45) Date of publication and mention of the grant of the patent: **09.08.2023**
(21) Application number: 19315159.4
(22) Date of filing: 10.12.2019
(51) Int. Cl.: B60L 53/14, B60L 53/35

(54) **CONNECTING ASSEMBLY FOR SUPPLYING ELECTRIC ENERGY FROM A GROUND CHARGING STATION TO A VEHICLE**
VERBINDUNGSANORDNUNG ZUR VERSORGUNG EINES FAHRZEUGES MIT ELEKTRISCHER ENERGIE VON EINER BODENLADESTATION
ENSEMBLE DE CONNEXION POUR FOURNIR DE L'ÉNERGIE ÉLECTRIQUE D'UNE STATION DE CHARGE AU SOL À UN VÉHICULE

(43) Date of publication of application: 16.06.2021
(73) Proprietor: HAGER-ELECTRO SAS, 67210 Obernai (FR)
(72) Inventor: Helfter, Marc, 67114 Eschau (FR); Laugel, Joachim, 68180 Horbourg-Wihr (FR); Meyer, Loïc, 67114 Eschau (FR); Kada, Philippe, 68000 Colmar (FR); Reiner, Ulrich, 67691 Hochspeyer (DE)
(74) Representative: Cabinet Nuss

(56) References cited:
- EP-A1- 3 552 862
- EP-A1- 3 552 863
- WO-A1-2017/162651

## Description

The invention relates to the field of electric vehicles. More particularly, the invention relates to a connecting assembly for supplying electric energy from a ground charging station to an electric vehicle.

It is known, for example, from documents US 2017/0096073 A1, EP 3 552 862 A1 and EP 3 552 863 A1 to couple a charger plug of an underground charging station and a charging receiver of an electric vehicle located on the bottom of the electric vehicle by way of guiding systems and/or mobile arms connecting both chargers. In some implementations, a laser guiding system or a camera can be used. In other implementations, infrared illumination, mechanical locators such as tapered pins, ultraviolet illumination, radar scanning or optical guidance can be used. Charger plug and charging receiver, as well as guiding system are vulnerable to extreme temperatures, rain, snow, ice, mud, external corrosion and dust, particularly when located respectively on the bottom of the electric vehicle and on the ground. For this reason, they may suffer from deterioration due to the outdoor conditions. Protruding guiding systems and/or electrical or mechanical connecting devices tend to occupy valuable space, be dangerously exposed to damages or undesired materials which may aggregate on or beneath them and being carried to them. Any protruding plain surface or volume may also constitute an obstacle to the air-flow during driving and therefore badly alter the aerodynamic behavior and/or create undesired supplementary aerodynamic noise.

This invention has as its object to remedy to these drawbacks by proposing a new connecting assembly that is configured to be easily connected and disconnected while being protected from the outdoor conditions and by offering a method for securely and reliably implementing said connecting assembly, while protecting sensitive plugging elements plug from outdoor conditions or dirt elements.

For this purpose, the present invention relates to a connecting assembly for supplying electric energy from a ground charging station to an electric vehicle, characterized in that the connecting assembly comprises at least:
- a first connector interface with a first electric plug arranged with an actuating device to operate an up and down movement between a first "storage" position in a recess situated inside the bottom face of the electric vehicle and a second "plugging" position outside said bottom face of said electric vehicle,
- a sliding surface positioned at the bottom surface of said electric vehicle, the "plugging" position of the first connector interface being located at the end of the sliding surface,
- a second connector interface with a second electric plug, carried by a movable connecting head of the ground charging station, said head having an upper surface arranged to cooperate with the sliding surface at the bottom of the electric vehicle to be guided and/or in contact in order to plug said second connector interface in said first connector interface.

Advantageous additional features and/or alternative embodiments are indicated in the dependent claims.

The invention will be better understood using the description below, which relates to several preferred embodiments, given by way of non-limiting examples and explained with reference to the accompanying drawings, in which :
- figure 1 schematically shows an electric vehicle shown from the bottom in a 3D view with a sliding surface according to the present invention,
- figure 2 is an enlarged schematic 3D view of the sliding surface of figure 1 seen from the bottom of said electric vehicle,
- figures 3a, 3b and 3c are schematic 3D views of the ground charging station with the second connector interface according to the present invention in three different stages of operation for the connection with the first connector interface,
- figures 4a, 4b and 4c are schematic 3D views showing the interaction between the first connector and second connector according to the present invention,
- figure 5 is a schematic enlarged 3D view of some of the elements forming the second connector according to the present invention,
- figure 6 is a 3D of the connecting assembly according to the present invention seen from the bottom side of an electric vehicle, and

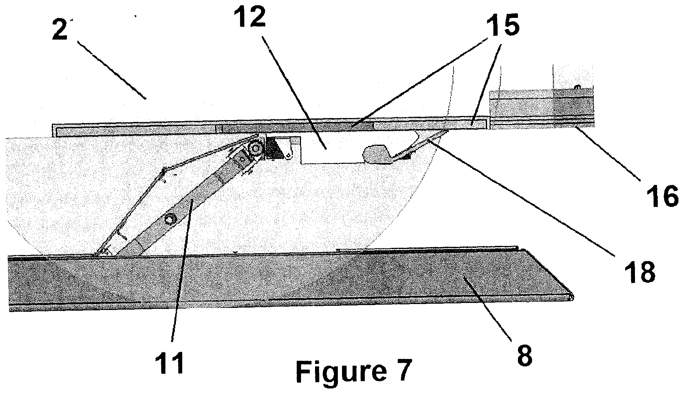

- figure 7 is a side view of the connecting assembly of the invention wherein the movable connecting head of the ground charging station cooperates with the sliding surface at the bottom surface of the electric vehicle.

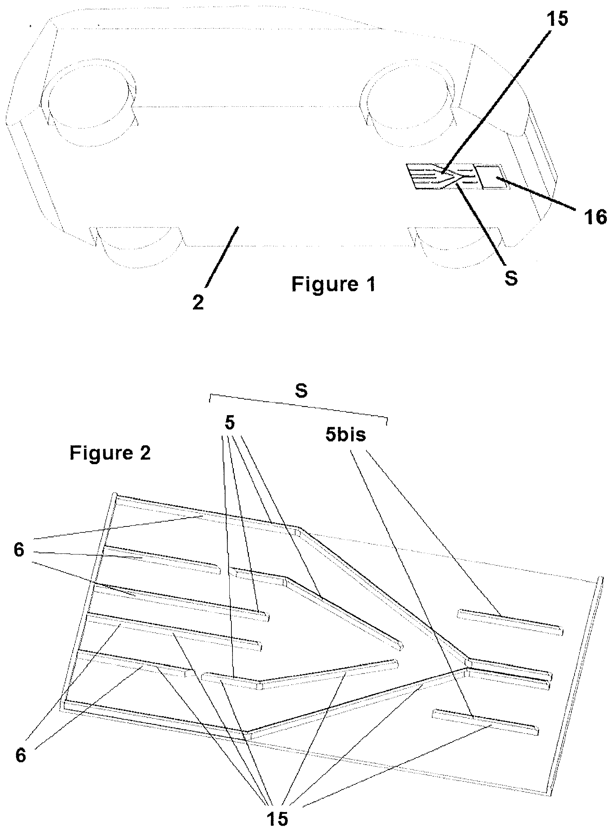

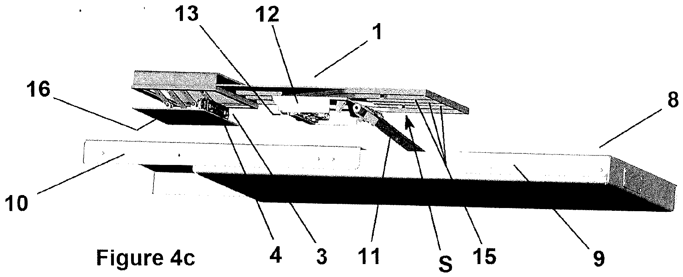

The figure 1 schematically represents an electric vehicle 2, for example a car or van as suggested. To charge or provide said vehicle with electric energy, for example to recharge its electrical batteries, it is provided with a first connector interface 3 which is here located at the bottom of said electric vehicle or car 2. In order to avoid damages and undesired aerodynamic effect, especially noise, the quoted first connecting interface 3 comprises essentially a first electric plug 4 which is here integrated in the bottom of the car itself, as illustrated on figure 1. On this figure 1, the first electric plug 4 is hidden. For charging operations, an access is given to said first electric plug 4 at all its relevant connecting devices, especially by giving access to the recess containing said first plug 4 or, better, by opening the lodging in which this part is stored when not needed, for example when the car is driving. This can be done by any conventional mechanical means known to the person skilled in the art, especially by a retractable mechanism as illustrated in figure 4c. This mechanism is advantageous because the trim of the first electric plug 4 and its support structure remains horizontal during the up and down movement when making it accessible or hidden.

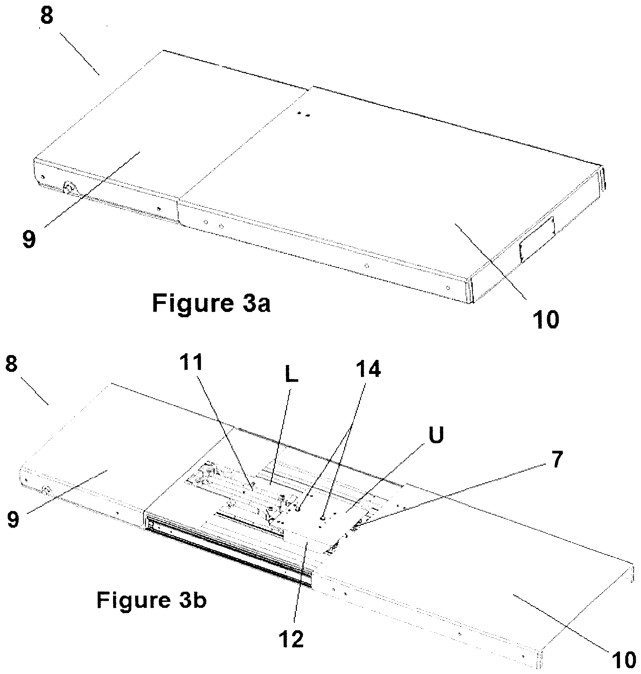

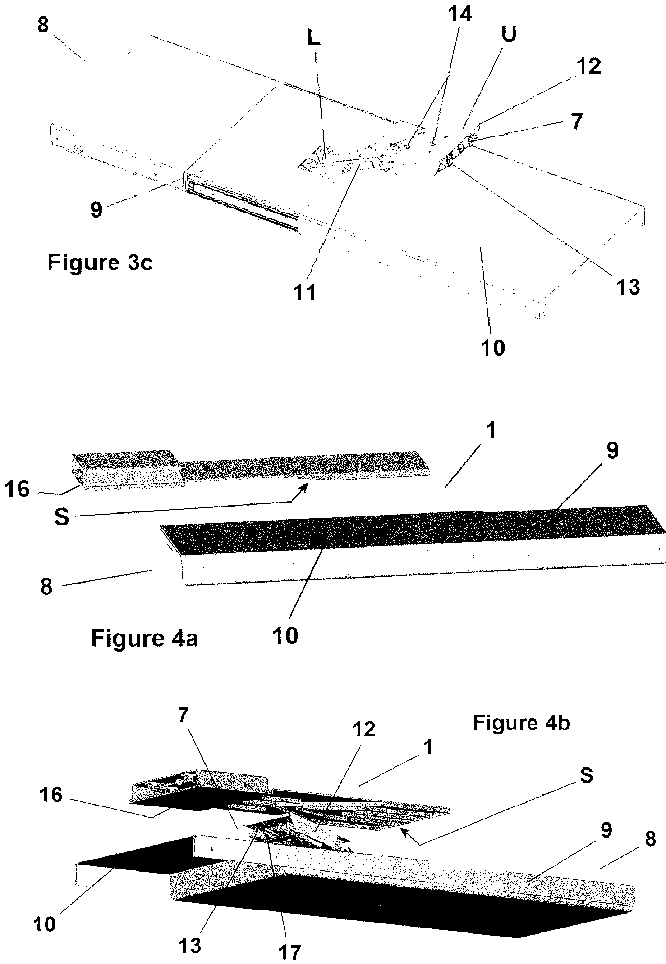

According to the present invention, a connecting assembly 1 is provided for supplying electric energy from a ground charging station 8 (as seen on figures 3a-3c and 4a-4c) to an electric vehicle 2, the connecting assembly (1) comprising at least:
- a first connector interface (3), configured to be located at the bottom of said electric vehicle (2), with a first electric plug (4) arranged with an actuating device to operate an up and down movement of the first electric plug (4) between a first "storage" position and a second "plugging" position, in the first "storage" position, the first electric plug (4) being in a recess which forms a lodging for the first electric plug and which is configured to be situated inside the bottom face of the electric vehicle (2) and in the second "plugging" position, the first electric plug (4) being configured to be outside said bottom face of said electric vehicle (2),
- a sliding surface (S) configured to be positioned at the bottom surface of said electric vehicle (2), the "plugging" position of the first connector interface (3) being located at the end of the sliding surface (S),
- a second connector interface (7) with a second electric plug (13), carried by a movable connecting head (12) of the ground charging station (8), said head (12) having an upper surface (U) arranged to cooperate with the sliding surface (S) configured to be at the bottom of the electric vehicle (2) and to be guided by and/or in contact with said sliding surface in order to plug said second connector interface (7) in said first connector interface (3)

As shown on figure 1, the sliding surface S leads to the first plug 4 when a charging operation is carried out as it will be explained afterwards.

According to a particular example of the construction of invention illustrated on figure 2, the connecting assembly 1 according to the present invention is also characterized in the fact that the bottom face of said electric vehicle 2 comprises at least one first electric plug 4 and a plurality of elements 15 located on the bottom of the electric vehicle 2, these elements realizing guiding surfaces 6 and/or contact surfaces 5. By electric plug one means any electrical device or assembly of compounds that are suitable to establish an electrical temporary connection which can be interrupted manually or automatically. For this the device is "plugged" or "unplugged" as described hereafter or in any usual way well known to the person skilled in the art. Thus, the "charging" of the battery or any other similar device of the electric vehicle 2 can occur when the first plug 4 and second plug 13 are connected together.

As illustrated on said figure, in an advantageous embodiment, the guiding surfaces 6 and/or contact surfaces 5 are made by parts of wall portions 15 projecting from the bottom of the electric vehicle 2 towards the ground in a perpendicular or quasi perpendicular direction. The surfaces of the wall portions 15 substantially parallel to the bottom surface of the vehicle correspond to the contact surfaces 5 while the surfaces of the wall portions 15 substantially perpendicular to the bottom surface of the vehicle correspond to the guiding surfaces 6.

To reduce the surface which may retain dirt, ice or other undesired substances, the wall portions 15 of the contact surfaces 5 are advantageously tapering towards a rim or edge.

In order to efficiently and reliably work, at least some of the guiding surfaces 6 and/or contact surfaces 5 are arranged on the bottom of the electric vehicle 2 in the shape of a funnel, the narrower open end of which leads to the first electric plug 4. In this way, these elements provide a kind of channel or channels which direct or lead the head 12 of the second electric plug 13 to be connected to the first electric plug 4.

In a further (not shown) embodiment the guiding surfaces 6 and/or contact surfaces 5 are designed to be retractable in the bottom of the electric vehicle 2. Thereby any disadvantage resulting from the protruding elements such as aerodynamic noise or retained unwanted material can be reduced or eliminated.

The functioning of the contact surfaces 5 will be described hereafter.

According to another particular example of the construction of invention schematically illustrated on figures 3a to 3c, the connecting assembly 1 according to the present invention is further characterized by the fact that the charging ground station 8 comprises an actuating device to move the connecting head 12 from a "storage" position inside a lodging L of a housing 9 of the ground charging station 8 and protected by a protective cover 10 to an extracted position where said cover 10 is retracted and said head 12 is positioned outside the lodging L and further to an "operating" position where the cover 10 is at least partly positioned over the lodging L of the head 12 in his "storage" position.

As visible on figures 3b and 3c, the ground charging station 8 comprises an articulated, slidable arm 11 with the head 12 at its free end, said head 12 being pivotable, i. e. it presents adapted means to be able to carry out such a movement. These means are also well known to the person skilled in the art. Examples of such mechanisms can be found, for instance, in the above quoted prior art publications.

The connecting assembly 1 according to the present invention is also characterized in that said slidable arm 11 has a pivotable flat head 12 bearing a second electric plug 13, said retractable arm 11 presenting means for being slid, elevated, pivoted and pressed against said contact surfaces 5 until the first electric plug 4 of the electric vehicle 2 contacts electrically the second electric plug 13 of the ground charging station 8. Thus, the contact surfaces 5 formed by the lower surfaces of the wall portions 15 positioned at the bottom of the vehicle 2 realize a discontinue surface making the sliding surface S of the connecting assembly 1, this sliding surface S being arranged to cooperate with the upper surface U of the head 12.

The same remark applies for the constitution or operating mode of said arm 11, head 12 and plugs 4, 13. In particular, a special device, as a spring, can be easily provided in order to ensure that said head 12 is continuously and sufficiently applied or pressed against said contact surfaces 5 during its corresponding phase of operation. Alternatively a sort of damper or similar can be foreseen that absorbs any excess of pressure possibly applied by the arm 11 when pressing said head 12 against said contact surfaces 5.

As suggested by figures 3b, 3c, 4b and 4c, the connecting assembly 1 according to the present invention is also characterized in that the head 12 has a planar or quasi-planar top panel designed to press on said contact surface 5 and provided with at least one guiding pin 14 designed to cooperate with the guiding surfaces 6 when the second electric plug 13 is driven towards or away from the first electric plug 4. For better stability at least two guiding pins 14 can be provided as shown on the embodiment illustrated by the figures. According to this cooperation, the guiding pin 14 of the head 12 of the second connector interface 7 is driven by sliding along the guiding surfaces 6 formed by the lateral faces of the wall portions 15 while the upper surface U of the head 12 is pressed and slides on the sliding surface S made by the contact surfaces 5 of the wall portions 15.

In order to avoid any problem of blocking or malfunction, the guiding surfaces 6 and the guiding pins 14 differ in their respective heights. Indeed, to cooperate properly, the upper portion of the guiding pins 14 does not interact with the bottom of the vehicle between the wall portions 15. Such arrangement ensures that the upper face U of the head 12 is maintained pressed against the sliding surface S of the connecting assembly 1 without tilting. For this reason, the guiding pins 14 of the head 12 are advantageously smaller in height than the guiding surfaces 6. As a non-limiting example, the guiding surfaces 6 or wall portions 15 of the contact surfaces 5 measure 12 mm whereas the pins 14 only measure 10 mm. Hence, the connecting assembly 1 is also characterized by the fact that the height of each guiding pin 14 is lesser than the height of the wall portions 15.

Additionally, in order to avoid any problem of blocking or malfunction, the wall portions 15 with the guiding surfaces 6 and/or contact surfaces 5 are separated each other by relatively small gaps or interruptions as shown on the left side of the illustration of figure 2. Such arrangement ensures that the upper surface U of is maintained against at least a portion of the sliding surface S of the connecting assembly 1 without tilting. For this reason, additional contact surfaces 5bis formed by wall portions 15 without specific guiding role are added to increase the stability of the head 12 sliding on the surface S. Indeed, these additional contact surfaces 5bis are arranged to provide a contact of the sliding surface S against the upper surface U of the head 12 on both side of the guiding pins 14 and thus avoid the tilting of the upper surface U of the head 12 with respect to the sliding surface S due to the discontinuity of this sliding surface S and the gap between the contact surfaces 5 for the sliding of the guiding pins 14 of the head 12. Such additional contact surfaces 5bis are shown on the right side of figure 2 by two additional parallel portions of contact surfaces 5 which are located outside the funnel designed by the other guiding surfaces 6.

In another particular example of the construction of invention, the connecting elements of the second electrical plug 13 of the head 12 are covered by the closed position of a movable protective lid 18 when the second plug 13 is not electrically connected to the first electric plug 4 of the electric vehicle 2 and uncovered by the opened position of said lid when said second plug 13 is connected or being connected to said first plug 4.

This can also be done by classical technical means known to the person skilled in the art.

Advantageously, said lid extends in front of the flat head 12 in direction of the first plug 4 and has the shape of an inclined wall or scraper designed to remove any undesired material that has accumulated at the bottom of the electric vehicle 2 when the second plug 13 is being connected to the first plug 4.

To operate, the movement of the lid and the head 12 can be synchronized so that the lid only opens when the head 12 is close enough to the first electric plug 4 of the electric vehicle 2.

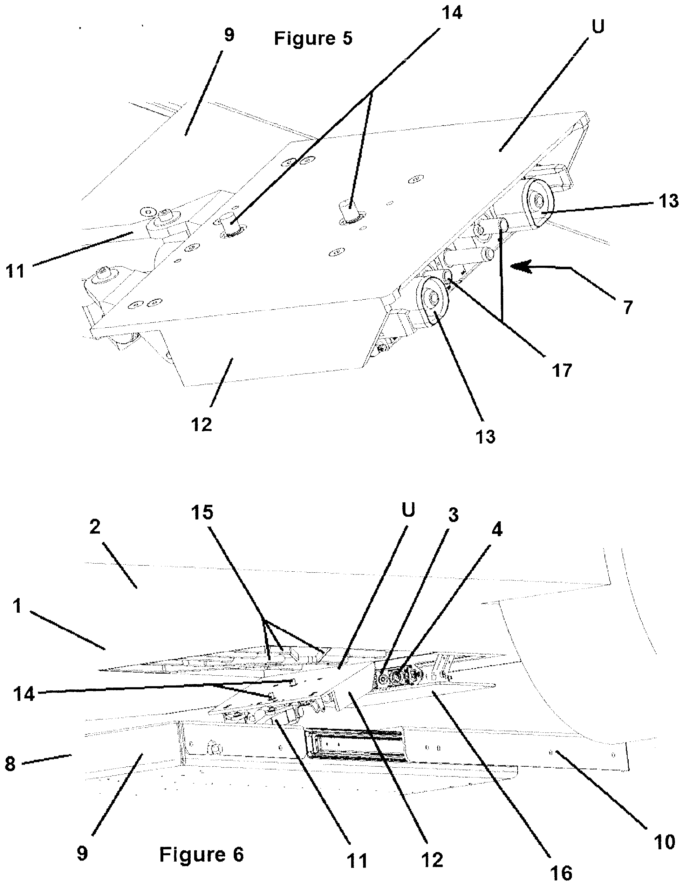

According to another particular example of the construction of invention, the connecting assembly 1 of the present invention is further characterized in that the first electrical plug 4 is mounted on a horizontal retractable supporting plate 16. This supporting plate 16 is arranged to retract at least the first electrical plug 4 inside the electric vehicle 2 in the "storage" position when not in use and stretched out at a lower level near the ground when in use in the "plugging" position. The supporting plate 16 is connected to the electric vehicle 2 via at least one conventional articulation means that allow said plate 16 to move vertically up and down while staying in its horizontal position. According to a preferred arrangement of the invention, the supporting plate 16 is positioned at the same level as the sliding surface S while the supported first electrical plug 4 are in retracted "storage" position inside electric vehicle 2. Figure 6 illustrates the connecting assembly 1 according to the present invention at a stage where the supporting plate 16 is down exposing the electric plug 4 of the first connecting interface 3 of the vehicle 2 while the arm 11 of the second connecting interface 7 is approaching with its own electric plug 13 on the head 12 on the upper surface U of which the two protruding guiding pins 14 will meet the guiding surfaces 6 and/or contact surfaces 5 of the connecting interface 3 to allow the two plugs 4, 13 to meet and connect electrically.

Preferably, the external face of the supporting plate 16 facing the ground is smooth, planar or quasi-planar and free of any elements that could create undesired aerodynamic perturbations or noise.

The supporting plate 16 is preferably arranged to be a flap or a shutter closing the recess wherein the first connector interface 3 is lodged in "storage" position. According to a specific example of this particular arrangement of the flap, the surface of the supporting plate 16 is positioned in the same plane as the bottom surface of the vehicle 2.

As far as the ground charging station 8 is concerned, the protective cover 10 is a horizontal plate which is large enough to cover the all the elements contained in the housing 9, especially the arm 11 and its head 12 when the ground charging station 8 is not in use.

As suggested on the figures 3b and 3c, the housing 9 has advantageously lateral guiding rails cooperating with corresponding lateral means on the protective cover plate 10 to allow it to slide laterally back and forth in horizontal translation to allow the arm 11 to be elevated outside the ground charging station 8 when needed.

In a preferred version, the pivotable head 12 is mainly flat, i. e. it has a planar upper surface U. This optimizes its contact with the small surfaces (edges, rims) of the contact surfaces 5 forming the sliding surface S.

More particularly, the upper surface U of said head 12 can therefore slide easily and reliably on the bottom of the electric vehicle 2 in the direction of first electrical plug 4 of the vehicle 2.

As a result from the description above, the connecting assembly 1 according to the present invention has several advantages over the known devices from the prior art. Especially, it has a first connector interface 3 that is located in a closed protected volume or in closable volume. In this position, the bottom of the electric vehicle 2 is almost flat in the connector area. When this volume is opened, for example by opening a movable flap or as shown on figure 4c, the said connector follows it, moving outside the bottom of the vehicle 2. Thus, the sliding surface S for the head 12 can be as low as the vehicle 2 itself, thereby reducing the volume it takes inside said electric vehicle 2.

The sliding surface S is composed of the several small surfaces formed by the contact surfaces 5. These contact surfaces 5 define a plane on which the upper surface U of the head 12 aligns. Dirt will scarcely stick to these small surfaces. Thus, the head 12 will encounter very little dirt on its way to said vehicle connector interface 3. The head 12 can be equipped with two guiding pins 14 protruding from its upper surface U. These guiding pins 14 will pass through the sliding surface S and find their way among the small surface elements formed by the guiding surfaces 6 and/or contact surfaces 5. They will also meet guiding surfaces 6 that will align and orientate the head 12 with the first connector interface of the electric vehicle 2. In the rest position, the head 12 is fully inside the ground charging station 8. A protective cover 10 opens from the housing 9 in order to allow the elevation of the head 12 that is clean and which does not bring dirt up to the bottom of the vehicle 2. The protective cover 10 recloses immediately so that to follow the horizontal head 12 displacement. Any dirt falling from the electric vehicle 2, especially due to the scratching effect of the head 12 sliding under the vehicle 2 will fall and land on said protective cover 10 and will not enter into the ground charging station 8. In this configuration, the connecting area of the connector interfaces 3, 7 remains clean.

According to another particular example of the construction of invention, the connecting assembly 1 further comprises a device arranged to operate the transfer of a fluid between the ground charging station 8 and the electric vehicle 2, through the first connector interface 3 and the second connector interface 7, each of these two connector interfaces 3, 7 comprising a respective plugs 17, 18 adapted to cooperate with each other to operate a watertight connection. According to a preferred example of construction of the invention, the transferred fluid is a heat-transfer fluid used to provide the cooling or the heating of particular elements of the vehicle. The connection of the respective plug 17, 18 of two connector interfaces 3, 7 is operated simultaneously with the connection of the electric plug 4, 13 of these same connector interfaces 3, 7. It must be noticed that, preferentially, each of the connector interfaces 3, 7 comprises a pair of fluid transfer plugs wherein, at the first plug, the fluid is uploaded and, at the second plug, the fluid is downloaded between the vehicle (2) and the station (8).

According to a first particular example of process, the heat-transfer fluid is transferred to the vehicle 2 to cool down particular elements of the vehicle, for example embedded batteries of the vehicle to avoid their over-heating after being used in a warm or hot environment.

According to a second particular example of process, the heat-transfer fluid is transferred to the vehicle 2 to heat particular elements of the vehicle, for example embedded batteries of the vehicle to optimize their working or their activation while the vehicle is parked in cold environment or the batteries stored in such same environment.

Of course, the invention is not limited to the embodiments described and represented in the accompanying drawings. Modifications remain possible, particularly from the viewpoint of the composition of the various elements, as long as they fall within the scope of the appended claims.

## Claims

1. Connecting assembly (1) for supplying electric energy from a ground charging station (8) to an electric vehicle (2), the connecting assembly (1) comprising at least:
- a first connector interface (3), configured to be located at the bottom of said electric vehicle (2), with a first electric plug (4) arranged with an actuating device to operate an up and down movement of the first electric plug (4) between a first "storage" position and a second "plugging" position, in the first "storage" position, the first electric plug (4) being in a recess which forms a lodging for the first electric plug (4) and which is configured to be situated inside the bottom face of the electric vehicle (2) and in the second "plugging" position, the first electric plug (4) being configured to be outside said bottom face of said electric vehicle (2),
- a sliding surface (S) configured to be positioned at the bottom surface of said electric vehicle (2), the "plugging" position of the first connector interface (3) being located at the end of the sliding surface (S),
- a second connector interface (7) with a second electric plug (13), carried by a movable connecting head (12) of the ground charging station (8), said head (12) having an upper surface (U) arranged to cooperate with the sliding surface (S) configured to be at the bottom of the electric vehicle (2) and to be guided by and/or in contact with said sliding surface in order to plug said second connector interface (7) in said first connector interface (3).

2. Connecting assembly (1) according to claim 1, **characterized in that** the charging ground station (8) comprises an actuating device to move the connecting head (12) from a "storage" position inside a lodging (L) of a housing (9) of the ground charging station (8) and protected by a protective cover (10) to an extracted position where said cover (10) is retracted and said head (12) is positioned outside the lodging (L) and further to an "operating" position where the cover (10) is at least partly positioned over the lodging (L) of the head (12) in his "storage" position.

3. Connecting assembly (1), according to claim 1 or 2, **characterized in that** the ground charging station (8) comprises an articulated, slidable arm (11) with the head (12) at its free end, said head (12) being pivotable.

4. Connecting assembly (1) according to any of claims 1 to 3, **characterized in that** the sliding surface comprises a plurality of elements configured to be located on the bottom of the electric vehicle (2), these elements realizing guiding surfaces (6) and contact surfaces (5).

5. Connecting assembly (1) according to claims 3 and 4, **characterized in that** said slidable arm (11) has a flat head (12) bearing a second electric plug (13), said retractable arm (11) presenting means for being slid, elevated, pivoted and pressed against said contact surfaces (5) until the first electric plug (4) of the electric vehicle (2) contacts electrically the second electric plug (13) of the ground charging station (8).

6. Connecting assembly (1) according to claim 5, **characterized in that** the head (12) has a planar top panel designed to press on said contact surfaces (5) and provided with at least one guiding pin (14) designed to cooperate with the guiding surfaces (6) when the second electric plug (13) is driven towards or away from the first electric plug (4).

7. Connecting assembly (1) according to any of claims 4 to 6, **characterized in that** the guiding surfaces (6) and/or contact surfaces (5) are made by parts of wall portions (15) configured to project from the bottom of the electric vehicle (2) towards the ground in a perpendicular direction.

8. Connecting assembly (1) according to claim 7, **characterized in that** the wall portions (15) of contact surfaces (5) are tapering towards a rim or edge.

9. Connecting assembly (1) according to any of claims 4 to 8, **characterized in that** some of the guiding surfaces (6) and/or contact surfaces (5) are configured to be arranged on the bottom of the electric vehicle (2) in the shape of a funnel, the narrower open end of which leads to the first electric plug (4).

10. Connecting assembly (1) according to any of claims 4 to 9, **characterized in that** the guiding surfaces (6) and/or contact surfaces (5) are designed to be retractable in the bottom of the electric vehicle (2).

11. Connecting assembly (1) according to claim 6 and optionally any of claims 7-10, **characterized in that** the height of each guiding pin (14) is lesser than the height of the wall portions (15).

12. Connecting assembly (1) according to any of claims 1 to 11, **characterized in that** the connecting elements of the second electrical plug (13) of the head (12) are covered by the closed position of a pivotable protective lid when the second plug (13) is not electrically connected to the first electric plug (4) and uncovered by the opened position of said lid when said second plug (13) is connected or being connected to said first plug (4).

13. Connecting assembly (1) according to claim 12, **characterized in that** said lid extends in front of the head (12) in direction of the first plug (4) and has the shape of a inclined wall or scraper designed to remove any undesired material that has accumulated at the bottom of the electric vehicle (2) when the second plug (13) is being connected to the first plug (4).

14. Connecting assembly (1) according to any of claims 1 to 13, **characterized in that** the first electrical plug (4) is mounted on a horizontal retractable supporting plate (16) which is configured to be retracted inside the electric vehicle (2) in the "storage" position when not in use and to be stretched out at a lower level near the ground when in use in the "plugging" position.

15. Connecting assembly (1) according to claim 14, **characterized in that** the supporting plate (16) is configured to be connected to the electric vehicle (2) via at least one articulation means that allow said plate (16) to move vertically up and down while staying in its horizontal position.

16. Connecting assembly (1) according to claims 14 or 15, **characterized in that** the external face of the supporting plate (16) facing the ground is smooth, planar and free of any elements that could create undesired aerodynamic perturbations or noise.

17. Connecting assembly (1) according to any of claims 2 to 16, **characterized in that** the protective cover (10) is a horizontal plate which is large enough to cover the all the elements contained in the housing (9), especially the arm (11) and its head (12) when the ground charging station (8) is not in use.

18. Connecting assembly (1) according to claim 17, **characterized in that** the housing (9) has lateral guiding rails cooperating with corresponding lateral means on the protective cover plate (10) to allow it to slide laterally back and forth in horizontal translation to allow the arm (11) to be elevated outside the ground charging station (8) when needed.

19. Connecting assembly (1) according to any of the previous claims, **characterized in that** the connecting assembly (1) further comprises a device arranged to operate the transfer of a fluid between the ground charging station (8) and the electric vehicle (2), through the first connector interface (3) and the second connector interface (7), each of these two connector interfaces (3, 7) comprising a respective plug (17, 18) adapted to cooperate with each to operate a watertight connection.

## Patentansprüche

1. Verbindungsanordnung (1) zur Versorgung eines elektrischen Fahrzeugs (2) mit elektrischer Energie von einer Bodenladestation (8), wobei die Verbindungsanordnung (1) zumindest Folgendes umfasst:
- eine erste Verbinderschnittstelle (3), dazu ausgelegt, am Boden des elektrischen Fahrzeugs (2) befindlich zu sein, mit einem ersten elektrischen Stecker (4), angeordnet mit einer Betätigungsvorrichtung zum Betreiben einer Aufwärts- und Abwärtsbewegung des ersten elektrischen Steckers (4) zwischen einer ersten "Verstauungsposition" und einer zweiten "Steckposition", wobei, in der "Verstauungsposition", der erste elektrische Stecker (4) in einer Vertiefung ist, die eine Aufnahme für den ersten elektrischen Stecker (4) bildet und die dazu ausgelegt ist, innerhalb der Bodenfläche des elektrischen Fahrzeugs (2) zu sein, und wobei, in der zweiten "Steckposition", der erste elektrische Stecker (4) dazu ausgelegt ist, außerhalb der Bodenfläche des elektrischen Fahrzeugs (2) zu sein,
- eine Gleitoberfläche (S), dazu ausgelegt, an der Bodenoberfläche des elektrischen Fahrzeugs (2) positioniert zu sein, wobei sich die "Steckposition" der ersten Verbinderschnittstelle (3) am Ende der Gleitoberfläche (S) befindet,
- eine zweite Verbinderschnittstelle (7) mit einem zweiten elektrischen Stecker (13), getragen durch einen bewegbaren Verbindungskopf (12) der Bodenladestation (8), wobei der Kopf (12) eine obere Oberfläche (U) aufweist, die angeordnet ist, um mit der Gleitoberfläche (S) zusammenzuwirken, dazu ausgelegt, am Boden des elektrischen Fahrzeugs (2) zu sein und geführt zu werden durch und/oder in Kontakt zu sein mit der Gleitoberfläche, um die zweite Verbinderschnittstelle (7) in die erste Verbinderschnittstelle (3) zu stecken.

2. Verbindungsanordnung (1) nach Anspruch 1, **dadurch gekennzeichnet, dass** die Bodenladestation (8) eine Betätigungsvorrichtung umfasst, um den Verbindungskopf (12) aus einer "Verstauungsposition" innerhalb einer Aufnahme (L) eines Gehäuses (9) der Bodenladestation (8) und geschützt durch eine Schutzabdeckung (10) in eine ausgezogene Position, in der die Abdeckung (10) eingezogen ist und der Kopf (12) außerhalb der Aufnahme (L) positioniert ist, und weiter in eine "Betriebsposition", in der die Abdeckung (10) zumindest teilweise über der Aufnahme (L) des Kopfes (12) in seiner "Verstauungsposition" positioniert ist, zu bewegen.

3. Verbindungsanordnung (1) nach Anspruch 1 oder 2, **dadurch gekennzeichnet, dass** die Bodenladestation (8) einen gelenkigen, gleitbaren Arm (11) mit dem Kopf (12) an seinem freien Ende umfasst, wobei der Kopf (12) schwenkbar ist.

4. Verbindungsanordnung (1) nach einem der Ansprüche 1 bis 3, **dadurch gekennzeichnet, dass** die Gleitoberfläche mehrere Elemente umfasst, die dazu ausgelegt sind, sich am Boden des elektrischen Fahrzeugs (2) zu befinden, wobei diese Elemente Führungsoberflächen (6) und Kontaktoberflächen (5) umsetzen.

5. Verbindungsanordnung (1) nach Ansprüchen 3 und 4, **dadurch gekennzeichnet, dass** der gleitbare Arm (11) einen flachen Kopf (12) aufweist, der einen zweiten elektrischen Stecker (13) trägt, wobei der einziehbare Arm (11) Mittel präsentiert, um geschoben, angehoben, geschwenkt und gegen die Kontaktoberflächen (5) gedrückt zu werden, bis der erste elektrische Stecker (4) des elektrischen Fahrzeugs (2) mit dem zweiten elektrischen Stecker (13) der Bodenladestation (8) in elektrischen Kontakt kommt.

6. Verbindungsanordnung (1) nach Anspruch 5, **dadurch gekennzeichnet, dass** der Kopf (12) eine planare obere Platte aufweist, die ausgestaltet ist zum Drücken auf die Kontaktoberflächen (5), und mit zumindest einem Führungsstift (14) versehen ist, ausgestaltet zum Zusammenwirken mit den Führungsoberflächen (6), wenn der zweite elektrische Stecker (13) zum ersten elektrischen Stecker (4) oder von diesem weg getrieben wird.

7. Verbindungsanordnung (1) nach einem der Ansprüche 4 bis 6, **dadurch gekennzeichnet, dass** die Führungsoberflächen (6) und/oder Kontaktoberflächen (5) aus Teilen von Wandabschnitten (15) bestehen, die dazu ausgelegt sind, aus dem Boden des elektrischen Fahrzeugs (2) in senkrechter Richtung hin zum Boden herauszuragen.

8. Verbindungsanordnung (1) nach Anspruch 7, **dadurch gekennzeichnet, dass** die Wandabschnitte (15) von Kontaktoberflächen (5) zu einem Rand oder einer Kante hin schräg zulaufen.

9. Verbindungsanordnung (1) nach einem der Ansprüche 4 bis 8, **dadurch gekennzeichnet, dass** einige der Führungsoberflächen (6) und/oder Kontaktoberflächen (5) dazu ausgelegt sind, auf dem Boden des elektrischen Fahrzeugs (2) in der Form eines Trichters angeordnet zu werden, dessen schmaleres offenes Ende zum ersten elektrischen Stecker (4) führt.

10. Verbindungsanordnung (1) nach einem der Ansprüche 4 bis 9, **dadurch gekennzeichnet, dass** die Führungsoberflächen (6) und/oder Kontaktoberflächen (5) dazu ausgestaltet sind, in den Boden des elektrischen Fahrzeugs (2) einziehbar zu sein.

11. Verbindungsanordnung (1) nach Anspruch 6 und optional einem der Ansprüche 7-10, **dadurch gekennzeichnet, dass** die Höhe jedes Führungsstifts (14) kleiner als die Höhe der Wandabschnitte (15) ist.

12. Verbindungsanordnung (1) nach einem der Ansprüche 1 bis 11, **dadurch gekennzeichnet, dass** die Verbindungselemente des zweiten elektrischen Steckers (13) des Kopfes (12) durch die geschlossene Position eines schwenkbaren Schutzdeckels abgedeckt sind, wenn der zweite Stecker (13) nicht elektrisch mit dem ersten elektrischen Stecker (4) verbunden ist, und durch die geöffnete Position des Deckels freigelegt sind, wenn der zweite Stecker (13) mit dem ersten Stecker (4) verbunden ist oder verbunden wird.

13. Verbindungsanordnung (1) nach Anspruch 12, **dadurch gekennzeichnet, dass** sich der Deckel vor dem Kopf (12) in Richtung des ersten Steckers (4) erstreckt und die Form einer geneigten Wand oder eines Schabers aufweist, ausgestaltet zum Entfernen von beliebigem unerwünschtem Material, das sich am Boden des elektrischen Fahrzeugs (2) angesammelt hat, wenn der zweite Stecker (13) mit dem ersten Stecker (4) verbunden wird.

14. Verbindungsanordnung (1) nach einem der Ansprüche 1 bis 13, **dadurch gekennzeichnet, dass** der erste elektrische Stecker (4) auf einer horizontalen einziehbaren Stützplatte (16) montiert ist, die dazu ausgelegt ist, im elektrischen Fahrzeug (2) in die "Verstauungsposition" eingezogen zu werden, wenn sie nicht in Verwendung ist, und bei einem niedrigeren Niveau nahe dem Boden ausgedehnt zu werden, wenn sie in der "Steckposition" in Verwendung ist.

15. Verbindungsanordnung (1) nach Anspruch 14, **dadurch gekennzeichnet, dass** die Stützplatte (16) dazu ausgelegt ist, mit dem elektrischen Fahrzeug (2) über zumindest ein Gelenkmittel, das der Platte (16) ermöglicht, sich vertikal nach oben und unten zu bewegen, dabei in ihrer horizontalen Position bleibend, verbunden zu werden.

16. Verbindungsanordnung (1) nach Ansprüchen 14 oder 15, **dadurch gekennzeichnet, dass** die äußere Fläche der Stützplatte (16), die zum Boden zeigt, glatt, planar und frei von Elementen ist, die unerwünschte aerodynamische Störungen oder Geräusche erzeugen können.

17. Verbindungsanordnung (1) nach einem der Ansprüche 2 bis 16, **dadurch gekennzeichnet, dass** die Schutzabdeckung (10) eine horizontale Platte ist, die groß genug ist, um alle Elemente abzudecken, die im Gehäuse (9) enthalten sind, insbesondere den Arm (11) und seinen Kopf (12), wenn die Bodenladestation (8) nicht in Verwendung ist.

18. Verbindungsanordnung (1) nach Anspruch 17, **dadurch gekennzeichnet, dass** das Gehäuse (9) laterale Führungsschienen aufweist, die mit entsprechenden lateralen Mitteln an der Schutzabdeckplatte (10) zusammenwirken, um dieser zu ermöglichen, bei horizontaler Verschiebung lateral vorwärts und rückwärts zu gleiten, um dem Arm (11) zu ermöglichen, bei Bedarf aus der Bodenladestation (8) heraus angehoben zu werden.

19. Verbindungsanordnung (1) nach einem der vorherigen Ansprüche, **dadurch gekennzeichnet, dass** die Verbindungsanordnung (1) ferner eine Vorrichtung umfasst, die angeordnet ist, um den Transfer eines Fluids zwischen der Bodenladestation (8) und dem elektrischen Fahrzeug (2) zu betreiben, durch die erste Verbinderschnittstelle (3) und die zweite Verbinderschnittstelle (7), wobei jede dieser zwei Verbinderschnittstellen (3, 7) einen entsprechenden Stecker (17, 18) umfasst, der dazu angepasst ist, mit jeder zusammenzuwirken, um eine wasserdichte Verbindung zu betreiben.

## Revendications

1. Ensemble de connexion (1) pour effectuer l'alimentation en énergie électrique depuis une borne de recharge au sol (8) à un véhicule électrique (2), l'ensemble de connexion (1) comprenant au moins :
- une première interface de connexion (3), configurée pour être située sur la partie inférieure dudit véhicule électrique (2), avec une première fiche électrique (4) agencée avec un dispositif d'actionnement pour effectuer un mouvement ascendant et descendant de la première fiche électrique (4) entre une première position d'« escamotage » et une seconde position d'« enfichage », dans la première position d'« escamotage », la première fiche électrique (4) étant dans un évidement qui forme un logement pour la première fiche électrique (4) et qui est configuré pour être situé à l'intérieur de la face inférieure du véhicule électrique (2) et dans la seconde position d'« enfichage », la première fiche électrique (4) étant configurée pour être à l'extérieur de ladite face inférieure dudit véhicule électrique (2),
- une surface de coulissement (S) configurée pour être positionnée sur la surface inférieure dudit véhicule électrique (2), la position d'« enfichage » de la première interface de connexion (3) étant située à l'extrémité de la surface de coulissement (S),
- une seconde interface de connexion (7) avec une seconde fiche électrique (13), supportée par une tête de connexion mobile (12) de la borne de recharge au sol (8), ladite tête (12) ayant une surface supérieure (U) agencée pour coopérer avec la surface de coulissement (S), configurée pour être sur la partie inférieure du véhicule électrique (2) et pour être guidée par et/ou en contact avec ladite surface de coulissement afin d'enficher ladite seconde interface de connexion (7) dans ladite première interface de connexion (3).

2. Ensemble de connexion (1) selon la revendication 1, **caractérisé en ce que** la borne de recharge au sol (8) comprend un dispositif d'actionnement pour déplacer la tête de connexion (12) depuis une position d'« escamotage », à l'intérieur d'un logement (L) d'un boîtier (9) de la borne de recharge au sol (8) et protégée par une couverture de protection (10), jusqu'à une position extraite, où ladite couverture (10) est rétractée et ladite tête (12) est positionnée à l'extérieur du logement (L), et en outre jusqu'à une position « de fonctionnement » où la couverture (10) est au moins partiellement positionnée par-dessus le logement (L) de la tête (12) dans sa position d'« escamotage ».

3. Ensemble de connexion (1), selon la revendication 1 ou 2, **caractérisé en ce que** la borne de recharge au sol (8) comprend un bras coulissant articulé (11) avec la tête (12) à son extrémité libre, ladite tête (12) étant pivotante.

4. Ensemble de connexion (1) selon l'une quelconque des revendications 1 à 3, **caractérisé en ce que** la surface de coulissement comprend une pluralité d'éléments configurés pour être situés sur la partie inférieure du véhicule électrique (2), ces éléments réalisant des surfaces de guidage (6) et également des surfaces de contact (5).

5. Ensemble de connexion (1) selon les revendications 3 et 4, **caractérisé en ce que** ledit bras coulissant (11) a une tête plate (12) portant une seconde fiche électrique (13), ledit bras rétractable (11) présentant des moyens destinés à faire l'objet d'un coulissement, d'une élévation, d'un pivotement et d'une pression contre lesdites surfaces de contact (5) jusqu'à ce que la première fiche électrique (4) du véhicule électrique (2) entre électriquement en contact avec la seconde fiche électrique (13) de la borne de recharge au sol (8).

6. Ensemble de connexion (1) selon la revendication 5, **caractérisé en ce que** la tête (12) a un panneau supérieur plan conçu pour appuyer sur lesdites surfaces de contact (5) et pourvu d'au moins une goupille de guidage (14) conçue pour coopérer avec les surfaces de guidage (6) lorsque la seconde fiche électrique (13) est entraînée vers ou à l'opposé de la première fiche électrique (4).

7. Ensemble de connexion (1) selon l'une quelconque des revendications 4 à 6, **caractérisé en ce que** les surfaces de guidage (6) et/ou surfaces de contact (5) sont composées par des parties de portions parois (15) configurées pour faire saillie à partir de la partie inférieure du véhicule électrique (2) vers le sol dans une direction perpendiculaire.

8. Ensemble de connexion (1) selon la revendication 7, **caractérisé en ce que** les portions parois (15) des surfaces de contact (5) s'effilent vers un rebord ou un bord.

9. Ensemble de connexion (1) selon l'une quelconque des revendications 4 à 8, **caractérisé en ce que** certaines des surfaces de guidage (6) et/ou des surfaces de contact (5) sont configurées pour être agencées sur la partie inférieure du véhicule électrique (2) sous la forme d'un entonnoir, dont l'extrémité ouverte plus étroite conduit à la première fiche électrique (4).

10. Ensemble de connexion (1) selon l'une quelconque des revendications 4 à 9, **caractérisé en ce que** les surfaces de guidage (6) et/ou surfaces de contact (5) sont conçues et appropriées pour être rétractables dans la partie inférieure du véhicule électrique (2).

11. Ensemble de connexion (1) selon la revendication 6 et optionnellement l'une quelconque des revendications 7 à 10, **caractérisé en ce que** la hauteur de chaque goupille de guidage (14) est inférieure à la hauteur des portions parois (15).

12. Ensemble de connexion (1) selon l'une quelconque des revendications 1 à 11, **caractérisé en ce que** les éléments de connexion de la seconde fiche électrique (13) de la tête (12) sont couverts par la position fermée d'un couvercle de protection pivotant lorsque la seconde fiche (13) n'est pas électriquement connectée à la première fiche électrique (4) et non couverts par la position ouverte dudit couvercle lorsque ladite seconde fiche (13) est connectée ou en train d'être connectée à ladite première fiche (4).

13. Ensemble de connexion (1) selon la revendication 12, **caractérisé en ce que** ledit couvercle s'étend devant la tête (12) dans la direction de la première fiche (4) et a la forme d'une paroi, ou d'un racloir, incliné(e) conçu(e) pour éliminer toute matière indésirable qui s'est accumulée sur la partie inférieure du véhicule électrique (2) lorsque la seconde fiche (13) est en train d'être connectée à la première fiche (4).

14. Ensemble de connexion (1) selon l'une quelconque des revendications 1 à 13, **caractérisé en ce que** la première fiche électrique (4) est montée sur une plaque de support horizontale rétractable (16) qui est configurée pour être rétractée à l'intérieur du véhicule électrique (2) dans la position d'« escamotage » lorsqu'elle n'est pas utilisée et pour être étirée à un niveau plus bas, près du sol, lorsqu'elle est utilisée dans la position d'« enfichage ».

15. Ensemble de connexion (1) selon la revendication 14, **caractérisé en ce que** la plaque de support (16) est configurée pour être reliée au véhicule électrique (2) par l'intermédiaire d'au moins un moyen d'articulation qui permet à ladite plaque (16) de se déplacer verticalement vers le haut et vers le bas tout en restant dans sa position horizontale.

16. Ensemble de connexion (1) selon les revendications 14 ou 15, **caractérisé en ce que** la face externe de la plaque de support (16) faisant face au sol est lisse, plane et dépourvue de tout élément qui pourrait créer des perturbations ou un bruit aérodynamiques indésirables.

17. Ensemble de connexion (1) selon l'une quelconque des revendications 2 à 16, **caractérisé en ce que** la couverture de protection (10) est une plaque horizontale qui est suffisamment grande pour couvrir la totalité des éléments contenus dans le boîtier (9), en particulier le bras (11) et sa tête (12) lorsque la borne de recharge au sol (8) n'est pas utilisée.

18. Ensemble de connexion (1) selon la revendication 17, **caractérisé en ce que** le boîtier (9) a des rails de guidage latéraux coopérant avec des moyens latéraux correspondants sur la plaque de couverture de protection (10) pour lui permettre de coulisser latéralement en va-et-vient en translation horizontale pour permettre au bras (11) d'être élevé à l'extérieur de la borne de recharge au sol (8) selon les besoins.

19. Ensemble de connexion (1) selon l'une quelconque des revendications précédentes, **caractérisé en ce que** l'ensemble de connexion (1) comprend en outre un dispositif agencé pour effectuer le transfert d'un fluide entre la borne de recharge au sol (8) et le véhicule électrique (2), par le biais de la première interface de connexion (3) et de la seconde interface de connexion (7), chacune de ces deux interfaces de connexion (3, 7) comprenant une fiche respective (17, 18) adaptée pour coopérer l'une avec l'autre pour effectuer une connexion étanche à l'eau.
